# EUROPEAN PATENT APPLICATION

(11) **EP 4 336 623 A1**
(43) Date of publication of application: **13.03.2024**
(21) Application number: 22916603.8
(22) Date of filing: 21.12.2022
(51) Int. Cl.: H01M 10/48, H01M 50/204, H01M 50/569, H01M 10/052

(54) **BATTERY PACK AND ENERGY STORAGE DEVICE COMPRISING SAME**

(30) Priority: 27.12.2021 KR 20210188649
(71) Applicant: LG Energy Solution, Ltd., Seoul 07335 (KR)
(72) Inventor: SHIN, Jong-Chan, Daejeon 34122 (KR); CHOI, Byung-Hyuk, Daejeon 34122 (KR)
(74) Representative: Plasseraud IP
(86) International application number: PCT/KR2022/021001
(87) International publication number: WO 2023/128461

(57) **Abstract**

A battery pack according to an embodiment of the present disclosure includes a plurality of cell module assemblies having at least one battery cell, and a control module electrically connected to the plurality of cell module assemblies to manage the plurality of cell module assemblies as at least two groups.

## Description

### TECHNICAL FIELD

The present disclosure relates to a battery pack and an energy storage system including the same, and more particularly, to a battery pack with increased convenience of installation work and an energy storage system including the same.

The present application claims priority to Korean Patent Application No. 10-2021-0188649 filed on December 27, 2021 in the Republic of Korea, the disclosures of which are incorporated herein by reference.

### BACKGROUND ART

Secondary batteries have high applicability according to product groups and electrical characteristics such as high energy density, and thus, are commonly applied not only to mobile devices but also to electric vehicles (EVs) or hybrid vehicles (HEVs) driven by electric power sources. Because secondary batteries may radically reduce the use of fossil fuel and do not generate any by-products that come with energy consumption, the secondary batteries are gaining attention as a new alternative energy source for improving eco-friendliness and energy efficiency.

Types of secondary batteries that are currently widely used include lithium-ion batteries, lithium polymer batteries, nickel cadmium batteries, nickel hydride batteries, and nickel zinc batteries. An operating voltage of a unit secondary battery cell, that is, a unit battery cell, ranges from about 2.5 V to about 4.5 V. Accordingly, when a higher output voltage is required, a battery pack may be configured by connecting a plurality of battery cells in series. Also, a battery pack may be configured by connecting a plurality of battery cells in parallel according to charge/discharge capacity required for the battery pack. Accordingly, the number of battery cells included in a battery pack may be set in various ways according to a required output voltage or charge/discharge capacity.

When a battery pack is configured by connecting a plurality of battery cells in series/parallel, a method of first configuring a battery module including at least one battery cell and adding other elements by using the at least one battery module to configure a battery pack or a battery rack is general.

In addition, recently, as issues such as power shortage or eco-friendly energy have emerged, an energy storage system (ESS) for storing generated power has received a lot of attention. Typically, when such an energy storage system is used, it is easy to construct a power management system such as a smart grid system, so that power supply and demand can be easily controlled in a specific region or city. In addition, as commercialization of electric vehicles is in full swing, such an energy storage system can be applied to electric charging stations capable of charging electric vehicles.

A conventional battery pack is generally configured to include a plurality of cell module assemblies and a control module for controlling the plurality of cell module assemblies. In the conventional control module, generally, all of the plurality of cell module assemblies are controlled by one control module, but there is a problem that delay in processing speed or degradation in processing quality frequently occurs due to such control.

In addition, in the conventional battery pack, in order to solve this problem, an individual control module is provided for each cell module assembly to solve the above problem through one-to-one control, but in this case, the number of control modules is required as much as the number of cell module assemblies, and as a result, there is a problem of increasing manufacturing cost in terms of prime cost, and a disadvantageous problem in terms of energy density because the space occupied in the battery pack increases by the increased number of control modules.

Therefore, it is requested to find a way to provide a battery pack that can improve energy density while securing price competitiveness and further increasing the control efficiency of the control module that controls the plurality of cell module assemblies, and an energy storage system including the same.

### DISCLOSURE

### Technical Problem

The present disclosure is designed to solve the problems of the related art, and therefore the present disclosure is directed to providing a battery pack capable of further enhancing control efficiency of a control module that controls a plurality of cell module assemblies, and an energy storage system including the same.

In addition, the present disclosure is directed to providing a battery pack capable of reducing manufacturing costs so as to secure price competitiveness, and an energy storage system including the same.

In addition, the present disclosure is directed to providing a battery pack capable of improving energy density, and an energy storage system including the same.

However, the technical problem to be solved by the present disclosure is not limited to the above-mentioned problem, and other problems not mentioned will be clearly understood by those skilled in the art from the present disclosure described below.

### Technical Solution

In one aspect of the present disclosure, there is provided a battery pack comprising: a plurality of cell module assemblies having at least one battery cell; and a control module electrically connected to the plurality of cell module assemblies to manage the plurality of cell module assemblies as at least two groups.

Also, preferably, each of the at least two groups may include at least two cell module assemblies.

Also, preferably, the plurality of cell module assemblies may be mutually stacked in at least two rows; and the control module may control the cell module assemblies of each row individually.

Also, preferably, the at least two groups may include a first cell module group including a plurality of cell module assemblies arranged in a row in a predetermined direction; and a second cell module group including a plurality of cell module assemblies spaced apart from the first cell module group by a predetermined distance and arranged in a row in a predetermined direction, and the control module may individually manage the first cell module group and the second cell module group.

Also, preferably, the control module may be disposed between the first cell module group and the second cell module group.

Also, preferably, the control module may include a first control unit electrically connected to the first cell module group to control the first cell module group; and a second control unit electrically connected to the second cell module group to control the second cell module group.

Also, preferably, the first control unit and the second control unit may be provided between the first cell module group and the second cell module group and may be spaced apart from each other by a predetermined distance.

Also, preferably, the battery pack may include a connection cable unit connecting the plurality of cell module assemblies and the control module.

Also, preferably, each of the first control unit and the second control unit may include a control board for managing each cell module group; and a cable connector provided on the control board and connected to the connection cable unit.

Also, preferably, each of the first control unit and the second control unit may include a cable holder provided on the control board and fixing the connection cable unit.

Also, preferably, the connection cable unit may include a first connection cable connecting the cell module assemblies of the first cell module group and the first control unit; and a second connection cable connecting the cell module assemblies of the second cell module group and the second control unit.

Also, preferably, a cable accommodation space for accommodating the first connection cable and the second connection cable may be formed between the first control unit and the second control unit.

Also, preferably, each of the first control unit and the second control unit may be configured to manage four cell module assemblies.

In addition, the present disclosure provides an energy storage system comprising the battery pack according to the above embodiments.

### Advantageous Effects

According to various embodiments as described above, it is possible to provide a battery pack capable of further enhancing control efficiency of a control module that controls a plurality of cell module assemblies, and an energy storage system including the same.

In addition, according to various embodiments as described above, it is possible to provide a battery pack capable of reducing manufacturing costs so as to secure price competitiveness, and an energy storage system including the same.

In addition, according to various embodiments as described above, it is possible to provide a battery pack capable of improving energy density, and an energy storage system including the same.

In addition, various additional effects can be achieved by various embodiments of the present disclosure. Various effects of the present disclosure will be described in detail in each embodiment, or descriptions of effects that can be easily understood by those skilled in the art will be omitted.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a view for describing a battery pack according to an embodiment of the present disclosure.
FIG. 2 is a perspective view showing the rear of the battery pack according to an embodiment of the present disclosure.
FIG. 3 is a plan view of the battery pack according to an embodiment of the present disclosure.
FIG. 4 is an enlarged view of the main part of the battery pack of FIG. 3.
FIG. 5 is a view for describing a control module of the battery pack according to an embodiment of the present disclosure.
FIG. 6 is a side view of the battery pack according to an embodiment of the present disclosure.
FIG. 7 is a block diagram for describing the battery pack according to an embodiment of the present disclosure.
FIG. 8 is a view for describing a battery pack according to another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the present disclosure, so it should be understood that other equivalents and modifications could be made thereto without departing from the scope of the present disclosure.

Meanwhile, in the present specification, terms indicating directions such as up, down, left, right, front, and back may be used, but these terms are only for convenience of description, and it is obvious to those skilled in the art that they may vary depending on the location of the target object or the location of the observer.

Terms such as first, second, and the like may be used in the following description. These terms are only used to distinguish any component from other components, and the nature, sequence, or order of the corresponding component is not limited by the term.

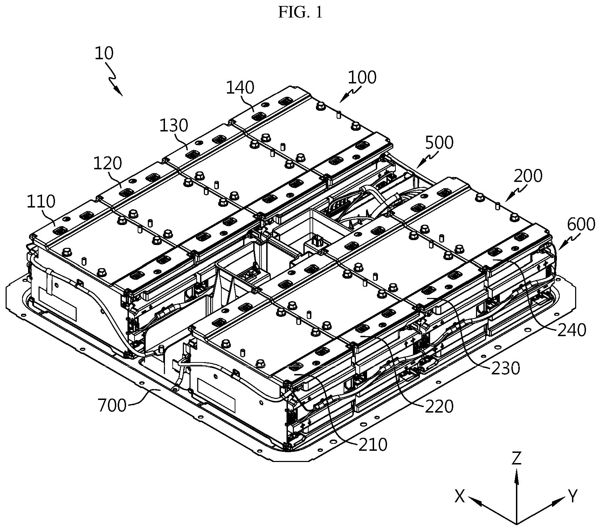

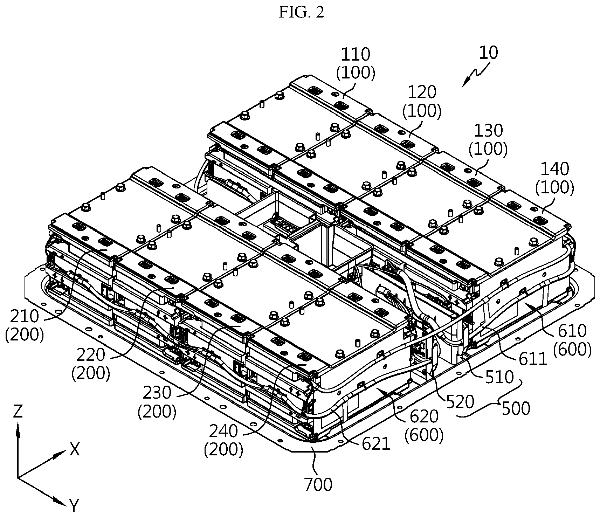

FIG. 1 is a view for describing a battery pack according to an embodiment of the present disclosure, and FIG. 2 is a perspective view showing the rear of the battery pack according to an embodiment of the present disclosure.

Referring to FIGS. 1 and 2, a battery pack 10 may include a plurality of cell module assemblies 100, 200 and a control module 500.

Each of the plurality of cell module assemblies 100, 200 may include at least one battery cell. The at least one battery cell may be provided as a secondary battery. For example, the at least one battery cell may be provided as a pouch-type secondary battery, a prismatic secondary battery, or a cylindrical secondary battery. Hereinafter, in this embodiment, the description is limited to that the at least one battery cell is provided as a pouch-type secondary battery.

Each of the cell module assemblies 100, 200 may include a plurality of battery cells stacked on each other, a bus bar unit electrically connected to the plurality of battery cells, and a cover housing covering at least a part of the plurality of battery cells and the bus bar unit.

The control module 500 may be electrically connected to the plurality of cell module assemblies 100, 200. The control module 500 is for managing the plurality of cell module assemblies 100, 200 and may be a BMS (Battery Management System).

Specifically, the control module 500 may control the operation of the plurality of cell module assemblies 100, 200 through charging and discharging of the plurality of cell module assemblies 100, 200, voltage and temperature sensing, and the like. Meanwhile, the number of the plurality of cell module assemblies 100, 200 may vary according to the required capacity or size of the battery pack 10.

The control module 500 may divide and manage the plurality of cell module assemblies 100, 200 into at least two groups 100, 200. That is, the control module 500 may divide the plurality of cell module assemblies 100, 200 into at least two groups 100, 200 and individually control each group.

In this embodiment, the control module 500 is configured to manage the plurality of cell module assemblies 100, 200 by dividing them into at least two groups 100, 200, so it is possible to secure a faster and more accurate control processing and remarkably improve the control quality, compared to the conventional case where than the plurality of cell module assembly are entirely managed with one control module.

Each of the at least two groups 100, 200 may include at least two cell module assemblies 110, 120, 130, 140; 210, 220, 230, 240. In this embodiment, since the control module 500 is configured to manage the groups 100, 200 including at least two cell module assemblies 110, 120, 130, 140; 210, 220, 230, 240, the manufacturing cost can be further lowered compared to a conventional structure in which each cell module assembly is managed with one control module.

Also, in this embodiment, through the control module 500 configured to manage the groups 100, 200 including at least two cell module assemblies 110, 120, 130, 140; 210, 220, 230, 240, it is possible to secure the maximum energy density of the battery pack 10 while securing the control quality of the control module 500 by reducing the space occupied by the control module 500 in the entire battery pack 10.

Hereinafter, the battery pack 10 according to this embodiment will be described at in more detail.

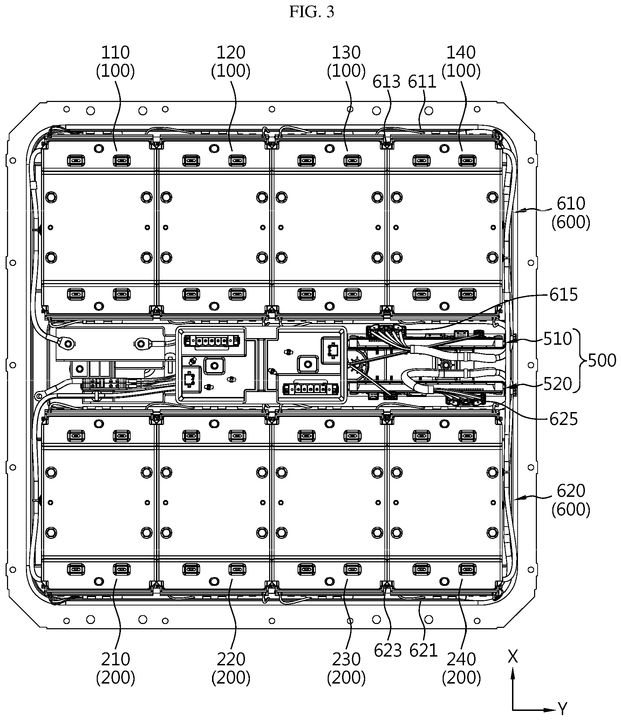

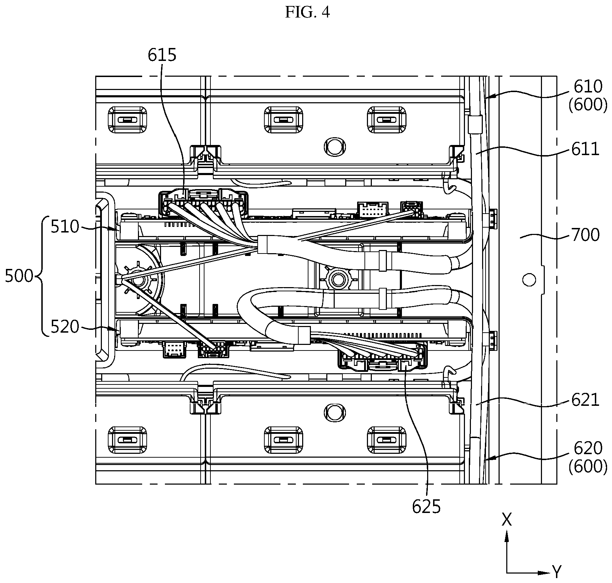

FIG. 3 is a plan view of the battery pack according to an embodiment of the present disclosure, and FIG. 4 is an enlarged view of the main part of the battery pack of FIG. 3.

Referring to FIGS. 3 and 4 and FIGS. 1 and 2 above, the plurality of cell module assemblies 100, 200 may be mutually stacked in at least two rows. The control module 500 may individually control the cell module assemblies 100, 200 in each row.

Accordingly, in this embodiment, the control module 500 may further improve the management efficiency of workers and the like during later inspection or management by individually controlling the cell module assemblies 100, 200 arranged in the same row.

The at least two groups 100, 200 may include a first cell module group 100 and a second cell module group 200.

The first cell module group 100 may include a plurality of cell module assemblies 110, 120, 130, 140 arranged in a row in a predetermined direction. The plurality of cell module assemblies 110, 120, 130, 140 of the first cell module group 100 may be electrically connected to each other.

The second cell module group 200 may include a plurality of cell module assemblies 210, 220, 230, 240 spaced apart from the first cell module group 100 by a predetermined distance and arranged in a row in a predetermined direction. The plurality of cell module assemblies 210, 220, 230, 240 of the second cell module group 200 may be electrically connected to each other.

The control module 500 may individually manage the first cell module group 100 and the second cell module group 200. Specifically, the control module 500 may individually control charging and discharging, voltage and temperature sensing, and the like of the first cell module group 100 and the second cell module group 200 for each group.

The control module 500 may be disposed between the first cell module group 100 and the second cell module group 200. According to the arrangement of the control module 500, the connection structure between the control module 500 and each of the cell module groups 100, 200 can be simplified as much as possible, and the shortest connection distance to each cell module group 100, 200 within the battery pack 10 can be implemented.

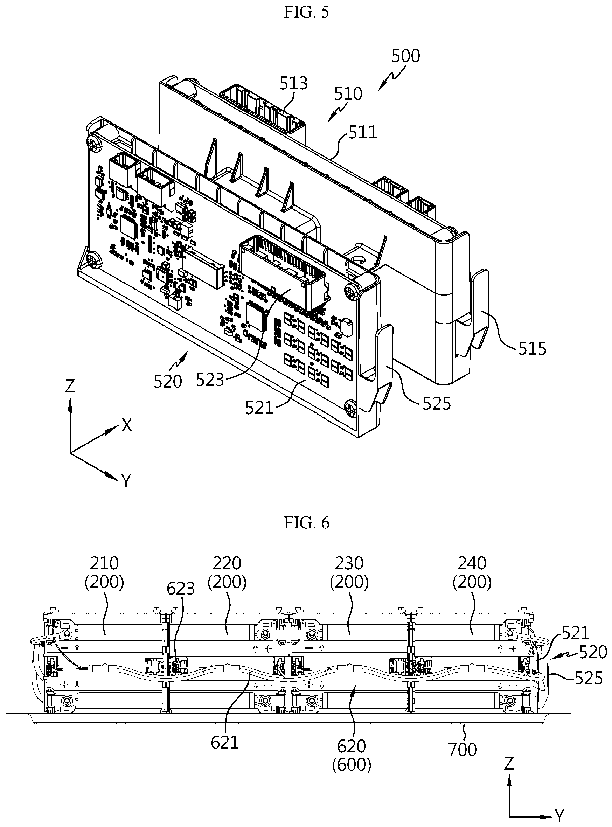

FIG. 5 is a view for describing a control module of the battery pack according to an embodiment of the present disclosure.

Referring to FIG. 5 and FIGS. 1 to 4 above, the control module 500 may include a first control unit 510 and a second control unit 520.

The first control unit 510 is electrically connected to the first cell module group 100 and may control the first cell module group 100. Specifically, the first control unit 510 may bundle up and control the plurality of cell module assemblies 110, 120, 130, 140 of the first cell module group 100 as one group.

The second control unit 520 is electrically connected to the second cell module group 200 and may control the second cell module group 200. Specifically, the second control unit 520 may bundle up and control the plurality of cell module assemblies 210, 220, 230, 240 of the second cell module group 200 as one group.

The first control unit 510 and the second control unit 520 are provided between the first cell module group 100 and the second cell module group 200, and may be spaced apart from each other by a predetermined distance. Specifically, the first control unit 510 may be disposed to face at least a part of the first cell module group 100 between the first cell module group 100 and the second cell module group 200, and the second control unit 520 may be disposed to face at least a part of the second cell module group 200 between the first cell module group 100 and the second cell module group 200.

FIG. 6 is a side view of the battery pack according to an embodiment of the present disclosure.

Referring to FIG. 6 and FIGS. 1 to 5 above, the battery pack 10 may include a connection cable unit 600.

The connection cable unit 600 may connect the plurality of cell module assemblies 100, 200 and the control module 500. The connection cable unit 600 may guide electrical connection between the plurality of cell module assemblies 100, 200 and the control module 500.

The first control unit 510 may include a control board 511 and a cable connector 513.

The control board 511 includes a printed circuit board and may manage the first cell module group 100. Specifically, the control board 511 may control charging and discharging of the plurality of cell module assemblies 110, 120, 130, 140 of the first cell module group 100, voltage and temperature sensing, and the like.

The cable connector 513 is provided on the control board 511 and may be connected to the connection cable unit 600. Specifically, the cable connector 513 may be connected to a first connection cable 610 to be described later.

The first control unit 510 may include a cable holder 515.

The cable holder 515 is provided on the control board 511 and may fix the connection cable unit 600 so as to restrict movement of the connection cable unit 600 when the connection cable unit 600 is mounted. Specifically, the cable holder 515 may fix a first connection cable 610 to be described later.

The cable holder 515 is provided at the rear of the control board 511 and may have a hook shape into which the first connection cable 610 can be inserted.

The shape of the cable holder 515 is not limited to this hook shape, and it is of course possible to have other shapes for stable fixation by restricting the movement of the first connection cable 610 described later.

Like the first control unit 510, the second control unit 520 may include a control board 521 and a cable connector 523.

The control board 521 includes a printed circuit board and may manage the second cell module group 200. Specifically, the control board 521 may control charging and discharging of the plurality of cell module assemblies 210, 220, 230, 240 of the second cell module group 200, voltage and temperature sensing, and the like.

The cable connector 523 is provided on the control board 521 and may be connected to the connection cable unit 600. Specifically, the cable connector 523 may be connected to a second connection cable 620 to be described later.

Like the first control unit 510, the second control unit 520 may include a cable holder 525.

The cable holder 525 is provided on the control board 521 and may fix the connection cable unit 600 so as to restrict movement of the connection cable unit 600 when the connection cable unit 600 is mounted. Specifically, the cable holder 525 may fix a second connection cable 620 to be described later.

The cable holder 525 is provided at the rear of the control board 521 and may have a substantially hook shape into which the second connection cable 620 can be inserted.

Like the cable holder 515 of the first control unit 510, the shape of the cable holder 525 is not limited to such a hook shape, and may have other shapes for stable fixation by limiting the movement of the second connection cable 620 described later.

The connection cable unit 600 may include a first connection cable 610 and a second connection cable 620.

The first connection cable 610 may connect the cell module assemblies 110, 120, 130, 140 of the first cell module group 100 and the first control unit 510.

The first connection cable 610 may include a cable body 611, a cell module port 613, and a control module port 615.

The cable body 611 may be provided as a wire cable of a predetermined length. The cable body 611 may have a length capable of covering all edges of the cell module assemblies 110, 120, 130, 140 of the first cell module group 100.

The cable body 611 may be disposed to at least partially surround the cell module assemblies 110, 120, 130, 140 of the first cell module group 100 along the edges of the cell module assemblies 110, 120, 130, 140 of the first cell module group 100.

The cell module port 613 is provided in the cable body 611 and may be connected to the cell module assembly 110, 120, 130, 140. The cell module ports 613 may be provided in plurality for connection to the plurality of cell module assemblies 110, 120, 130, 140.

The control module port 615 is provided in the cable body 611 and may be connected to the first control unit 510 of the control module 500. Specifically, the control module port 615 may be connected to the control board 511 of the first control unit 510.

The second connection cable 620 may connect the cell module assemblies 210, 220, 230, 240 of the second cell module group 200 and the second control unit 520.

The second connection cable 620 may include a cable body 621, a cell module port 623, and a control module port 625.

The cable body 621 may be provided as a wire cable of a predetermined length. The cable body 621 may be provided to have a length capable of covering all edges of the cell module assemblies 210, 220, 230, 240 of the second cell module group 200.

The cable body 621 may be disposed to at least partially surround the cell module assemblies 210, 220, 230, 240 of the second cell module group 200 along the edges of the cell module assemblies 210, 220, 230, 240 of the second cell module group 200.

The cell module port 623 is provided in the cable body 621 and may be connected to the cell module assembly 210, 220, 230, 240. The cell module ports 623 may be provided in plurality for connection to the plurality of cell module assemblies 210, 220, 230, 240.

The control module port 625 is provided in the cable body 621 and may be connected to the second control unit 520 of the control module 500. Specifically, the control module port 625 may be connected to the control board 521 of the second control unit 520.

A cable accommodation space for accommodating the first connection cable 610 and the second connection cable 620 may be formed between the first control unit 510 and the second control unit 520.

Specifically, a part of the cable body 611 of the first connection cable 610 and a part of the cable body 621 of the second connection cable 620 may be accommodated in the cable accommodation space.

Accordingly, the energy density of the entire battery pack 10 can be further increased by preventing the first connection cable 610 and the second connection cable 620 from moving and more efficiently arranging them within the battery pack 10.

Looking at other configurations of the battery pack 10 with reference to FIG. 1 again, the battery pack 10 may include a pack case 700.

The pack case 700 may accommodate the plurality of cell module assemblies 100, 200, the control module 500, and the connection cable unit 600. To this end, an accommodation space capable of accommodating the plurality of cell module assemblies 100, 200, the control module 500, and the connection cable unit 600 may be provided in the pack case 700. The accommodating space may be a bottom space of the pack case 700 that is formed to have a step from an edge of the pack case 700 to a predetermined depth.

In addition, although not shown, the pack case 700 may be configured to further include a pack cover covering the plurality of cell module assemblies 100, 200, the control module 500, and the connection cable unit 600. Here, the pack case 700 may be bolted to the pack cover through a bolting member.

In addition, a sealing member may be provided between the edge of the pack case 700 and the edge of the pack cover. Here, the sealing member is to prevent penetration of moisture or foreign substances between the pack case 700 and the pack cover, and may be provided as, for example, a sealing gasket. This is only an example, and the sealing member may be provided with other members having high sealing performance capable of sealing between the pack case 700 and the pack cover in addition to the sealing gasket.

In addition, although not shown, the battery pack 10 may further include a cooling unit such as a heatsink for cooling the plurality of cell module assemblies 100, 200. The heatsink may be provided in an air-cooled or water-cooled type, and may be provided on the upper or lower side of the bottom of the pack case 700.

The heatsink may be provided with a cooling passage for the flow of a cooling fluid. Here, the cooling fluid may be provided as a cooling liquid, which is generally water. It is not limited thereto, and the cooling fluid may be provided as a phase change material through evaporation of liquid, latent heat, etc., or other cooling material for cooling the battery pack 10, of course.

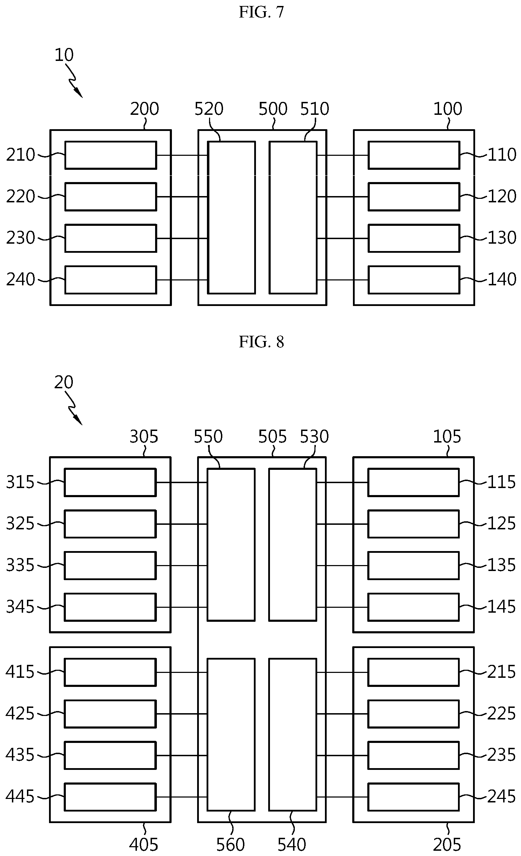

FIG. 7 is a block diagram for describing the battery pack according to an embodiment of the present disclosure.

Referring to FIG. 7, each of the first control unit 510 and the second control unit 520 of the control module 500 may be configured to include four cell module assemblies 110, 120, 130, 140; 210, 220, 230, 240. Specifically, the first control unit 510 may control four cell module assemblies 110, 120, 130, 140 of the first cell module group 100, and the second control unit 520 may control four cell module assemblies 210, 220, 230, 240 of the second cell module group 200.

Through the individual group control of the first control unit 510 and the second control unit 520, even if a problem occurs in any one of the first control unit 510 and the second control unit 520, the control operation of the cell module assemblies may be performed through the remaining control units. That is, in this embodiment, even if a problem occurs in any one control unit, problems such as inoperability of the entire battery pack can be fundamentally prevented.

In addition, in this embodiment, even if a problem occurs in some of the cell module assemblies of any one of the cell module groups, the other cell module group can be individually controlled through individual control between the groups of the control module 500. Thus, even if a problem occurs in any one cell module group among the cell module groups, problems such as inoperability of the entire battery pack can be fundamentally prevented.

Eventually, in the battery pack 10 according to this embodiment, if a problem occurs in the cell module groups 100, 200 of any one of the cell module groups 100, 200 or in any one control unit 510, 520 of the control units 510, 520, the operation of the problematic cell module group or control unit may be blocked, and the operation of the cell module group in a normal state may be controlled through the remaining control unit in the normal state.

Therefore, in this embodiment, even when a problem occurs in any one cell module assembly belonging to a specific cell module group 100 or 200 of the battery pack 10, the control module 500 can control the operation of the rest cell module group 100, 200 in a normal state among the entire battery pack 10, so inoperability of the entire battery pack 10 can be prevented even when a problem occurs in some cell module assembly.

FIG. 8 is a view for describing a battery pack according to another embodiment of the present disclosure.

Since the battery pack 20 according to this embodiment is similar to the battery pack 10 of the previous embodiment, redundant description of components substantially the same as or similar to those of the previous embodiment will be omitted, and the following will focus on differences from the previous embodiment.

Referring to FIG. 8, the battery pack 20 may include first to fourth cell module groups 105, 205, 305, 405 and a control module 505 for controlling the cell module group 105, 205, 305, 405.

The first cell module group 105 may include a plurality of cell module assemblies 115, 125, 135, 145. The second cell module group 205 may include a plurality of cell module assemblies 215, 225, 235, 245. The third cell module group 305 may include a plurality of cell module assemblies 315, 325, 335, 345. The fourth cell module group 405 may include a plurality of cell module assemblies 415, 425, 435, 445.

The control module 505 may include first to fourth control units 530, 540, 550, 560.

The first control unit 530 may control the plurality of cell module assemblies 115, 125, 135, 145 of the first cell module group 105. The second control unit 540 may control the plurality of cell module assemblies 215, 225, 235, 245 of the second cell module group 205. The third control unit 550 may control the plurality of cell module assemblies 315, 325, 335, 345 of the third cell module group 305. The fourth control unit 560 may control the plurality of cell module assemblies 415, 425, 435, 445 of the fourth cell module group 405.

As such, the control module 505 may individually control four cell module groups including two or more cell module assemblies for each group according to the required capacity or size of the battery pack 20. In addition, although not shown, it is also possible to control three cell module groups or control four or more cell module groups for each group through the control module.

An energy storage system according to an embodiment of the present disclosure includes at least one battery pack 10, 20 according to an embodiment of the present disclosure described above. In addition, the energy storage system according to an embodiment of the present disclosure may further include general components included in an energy storage system in addition to the battery pack 10, 20.

In particular, the energy storage system according to an embodiment of the present disclosure may be a residential (building) energy storage system for home or office used to store energy in a house, office, or building.

In addition, the energy storage system may include a plurality of battery packs 10, 20 an embodiment of the present disclosure, which are electrically connected to each other in order to have a large energy capacity.

In addition, the energy storage system according to an embodiment of the present disclosure may further include various other components of energy storage systems known at the time of filing of this application. Moreover, the energy storage system may be used in various places or devices, such as a smart grid system or an electric charging station.

Also, a vehicle according to an embodiment of the present disclosure may include at least one battery pack 10, 20 according to an embodiment of the present disclosure. In addition, the vehicle according to an embodiment of the present disclosure may further include various other components included in a vehicle in addition to the battery pack. For example, the vehicle according to an embodiment of the present disclosure may further include a vehicle body, a motor, and a control device such as an electronic control unit (ECU), in addition to the battery pack 10, 20 according to an embodiment of the present disclosure.

According to various embodiments as described above, it is possible to provide a battery pack 10, 20 capable of further enhancing control efficiency of a control module 500 that controls a plurality of cell module assemblies 100, 200, and an energy storage system including the same.

In addition, according to various embodiments as described above, it is possible to provide a battery pack 10, 20 capable of reducing manufacturing costs so as to secure price competitiveness, and an energy storage system including the same.

In addition, according to various embodiments as described above, it is possible to provide a battery pack 10, 20 capable of improving energy density, and an energy storage system including the same.

While the preferred embodiments of the present disclosure have been shown and described, the present disclosure is not limited to the specific embodiments described above, various modifications may be made by one of ordinary skill in the art to which the present disclosure pertains without departing from the gist of the present disclosure as defined by the claims, and these modifications should not be individually understood from the technical feature or prospect of the present disclosure.

## Claims

1. A battery pack comprising:
a plurality of cell module assemblies having at least one battery cell; and
a control module electrically connected to the plurality of cell module assemblies to manage the plurality of cell module assemblies as at least two groups.

2. The battery pack according to claim 1, wherein each of the at least two groups includes at least two cell module assemblies.

3. The battery pack according to claim 1, wherein the plurality of cell module assemblies are mutually stacked in at least two rows; and
wherein the control module controls the cell module assemblies of each row individually.

4. The battery pack according to claim 3, wherein the at least two groups includes:
a first cell module group including a plurality of cell module assemblies arranged in a row in a predetermined direction; and
a second cell module group including a plurality of cell module assemblies spaced apart from the first cell module group by a predetermined distance and arranged in a row in a predetermined direction,
wherein the control module individually manages the first cell module group and the second cell module group.

5. The battery pack according to claim 4, wherein the control module is disposed between the first cell module group and the second cell module group.

6. The battery pack according to claim 4, wherein the control module includes:
a first control unit electrically connected to the first cell module group to control the first cell module group; and
a second control unit electrically connected to the second cell module group to control the second cell module group.

7. The battery pack according to claim 6, wherein the first control unit and the second control unit are provided between the first cell module group and the second cell module group and are spaced apart from each other by a predetermined distance.

8. The battery pack according to claim 6, wherein the battery pack includes a connection cable unit connecting the plurality of cell module assemblies and the control module.

9. The battery pack according to claim 8, wherein each of the first control unit and the second control unit includes:
a control board for managing each cell module group; and
a cable connector provided on the control board and connected to the connection cable unit.

10. The battery pack according to claim 9, wherein each of the first control unit and the second control unit includes a cable holder provided on the control board and fixing the connection cable unit.

11. The battery pack according to claim 8, wherein the connection cable unit includes:
a first connection cable connecting the cell module assemblies of the first cell module group and the first control unit; and
a second connection cable connecting the cell module assemblies of the second cell module group and the second control unit.

12. The battery pack according to claim 11, wherein a cable accommodation space for accommodating the first connection cable and the second connection cable is formed between the first control unit and the second control unit.

13. The battery pack according to claim 5, wherein each of the first control unit and the second control unit is configured to manage four cell module assemblies.

14. An energy storage system, comprising the battery pack according to any one of claims 1 to 13.
